# EUROPÄISCHE PATENTSCHRIFT

(11) **EP 0 542 950 B1**
(45) Veröffentlichungstag und Bekanntmachung des Hinweises auf die Patenterteilung: **02.08.1995**
(21) Anmeldenummer: 92910157.4
(22) Anmeldetag: 07.05.1992
(51) Int. Cl.: G01G 23/00, G01G 19/06, B61B 13/04

(54) **ÜBERLASTPRÜFVORRICHTUNG FÜR FÖRDERWAGEN AN EINER SCHIENENGEBUNDENEN KLEINFÖRDERANLAGE**
OVERLOAD TEST DEVICE FOR CONVEYOR CARRIAGES ON A SMALL RAILMOUNTED CONVEYOR INSTALLATION
DISPOSITIF DE CONTROLE DE SURCHARGE POUR WAGONNETS SUR UNE PETITE INSTALLATION DE TRANSPORT A RAILS

(30) Priorität: 07.06.1991 CH 1713/91
(43) Veröffentlichungstag der Anmeldung: 26.05.1993
(73) Patentinhaber: Telelift GmbH, 82178 Puchheim (DE)
(72) Erfinder: PIRCHER, Herbert, D-8033 Planegg (DE)
(74) Vertreter: Schmauder, Klaus Dieter
(86) Internationale Anmeldenummer: EP9200997
(87) Internationale Veröffentlichungsnummer: WO9221947

(56) Entgegenhaltungen:
- DD-A- 144 898
- DE-C- 590 880
- NL-A- 8 403 085
- US-A- 3 642 081
- US-A- 4 081 045
- SOVIET INVENTIONS ILLUSTRATED, Section PQ, Week D12, 29. April 1981, Derwent Publications Ltd., London, GB; Class Q3, page 10, AN C5357 D/12 & SU-A-745 809

## Beschreibung

Die Erfindung betrifft eine Überlastprüfvorrichtung für Förderwagen an einer schienengebundenen Kleinförderanlage gemäss Oberbegriff des Anspruches 1.

Insbesondere bei Kleinförderanlagen besteht das Problem, dass Förderwagen überladen werden können, was einerseits zu einer Beschädigung der Förderanlage und andererseits zu Störungen des Fahrbetriebs führen kann. Aus der DE-PS 590 880 ist eine Überlastprüfvorrichtung der eingangs genannten Art bekannt, wobei der an einem Schienenstrang anstossende Schienenabschnitt quer zur Schienenrichtung gelenkig gelagert ist und sich auf der anderen Seite auf einer Federeinrichtung abstützt. Diese Ausbildung hat den Nachteil, dass der sich auf der Federeinrichtung abstützende Endabschnitt des Schienenabschnittes bei stärker beladenem Förderwagen einen vertikalen Absatz mit dem angrenzenden Schienenstrang bildet, wodurch die Betriebssicherheit der Förderanlage gefährdet ist. Ausserdem wird das Wiegeergebnis sehr stark von der Halteposition des Förderwagens auf dem Schienenabschnitt und damit von dessen Abstand von der Federeinrichtung beeinflusst, so dass keine einwandfreien Messergebnisse gewährleistet sind.

Aufgabe der Erfindung ist es, eine Überlastprüfvorrichtung der eingangs genannten Art zu schaffen, mit der die erwähnten Nachteile vermieden werden können.

Die Aufgabe wird erfindungsgemäss durch die kennzeichnenden Merkmale des Anspruches 1 gelöst, da der Fahrbetrieb der Kleinförderanlage durch den Federweg des Schienenabschnittes am wenigsten beeinträchtigt wird und das Wiegeergebnis von der Halteposition unabhängig ist.

Mit Hilfe der Überlastprüfvorrichtung ist es möglich, die Beladung eines Förderwagens festzustellen, wobei die Überlastprüfvorrichtung so ausgebildet sein kann, dass sie bei einem Überladen des Förderwagens den Fahrbetrieb unterbricht oder das Anfahren des Förderwagens überhaupt verhindert. Eine solche Überlastprüfvorrichtung wird zweckmässigerweise an einer Station angeordnet, in der der Förderwagen beladen wird. Es ist aber auch möglich, allein oder zusätzlich im Streckenverlauf einer Kleinförderanlage eine solche Überlastprüfvorrichtung vorzusehen. Dabei erweist es sich als vorteilhaft, dass die Überlastprüfvorrichtung sehr wirksam ist, ohne einen grossen Federweg zu beanspruchen, so dass der Fahrbetrieb in der Kleinförderanlage durch den Einbau der Überlastprüfvorrichtung nicht oder nur unwesentlich beeinträchtigt wird.

Vorteilhafte Ausgestaltungen der Überlastprüfvorrichtung sind in den Ansprüchen 2 bis 6 beschrieben.

Für die Ausbildung der Federeinrichtung ergeben sich die verschiedensten Möglichkeiten. Die Federeinrichtung kann Schraubenfedern, Torsionsfedern oder dergleichen enthalten und besonders vorteilhaft ist jedoch eine Ausgestaltung nach Anspruch 2. Die Verwendung einer Blattfeder erlaubt eine besonders einfache elektrische Erfassung des Federweges gemäss Ausbildung nach Anspruch 3. Die elektrischen Daten können dann für Mess- und/oder Schaltzwecke ausgewertet werden.

Besonders vorteilhaft ist eine Weiterbildung nach Anspruch 4, wodurch der Verschiebe- bzw. Federweg des Schienenabschnittes besonders klein gehalten werden kann und dennoch ein grösserer Schaltweg zur Auswertung zur Verfügung steht. Eine besonders einfache und betriebssichere Lösung umschreibt Anspruch 5.

Die Überlastprüfvorrichtung kann beispielsweise zu reinen Messzwecken verwendet werden, um einen Förderwagen mit einer bestimmten Menge eines Gutes zu füllen. Ihre bevorzugte Aufgabe besteht jedoch in einer Ausbildung nach Anspruch 6 darin, das Abfahren eines Förderwagens bei Überladung zu verhindern.

Ausführungsbeispiele des Gegenstandes der Erfindung werden nachfolgend anhand der Zeichnungen näher beschrieben, dabei zeigen:

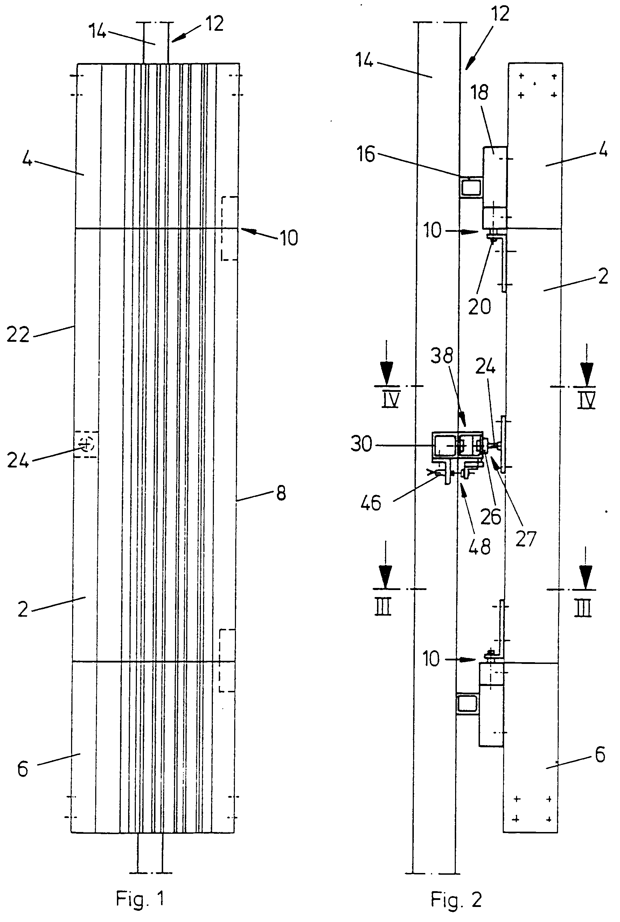

- Figur 1: einen Schienenstrang im Ausschnitt mit einer Überlastprüfvorrichtung, im Grundriss;
- Figur 2: den Schienenstrang der Figur 1 in Seitenansicht;

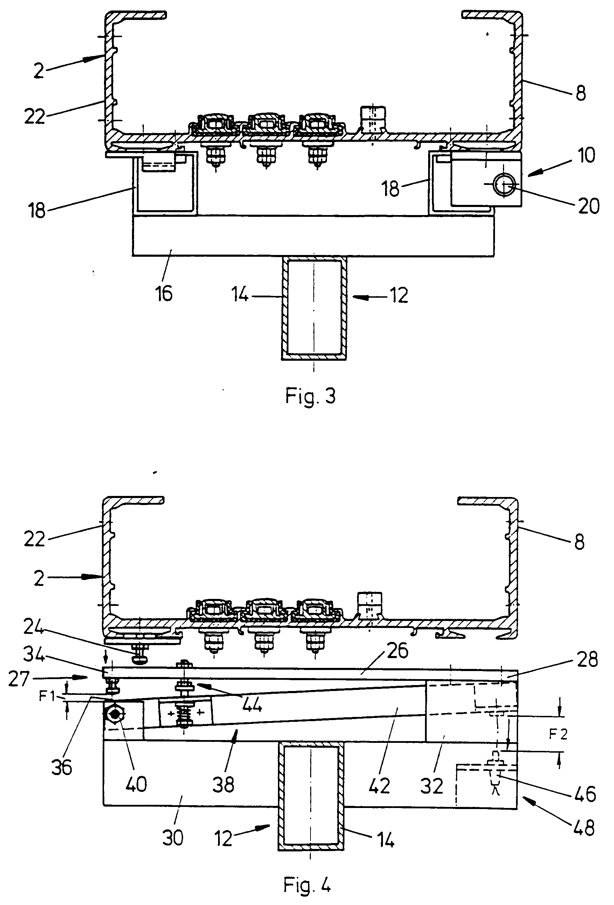

- Figur 3: die Überlastprüfvorrichtung im Schnitt III-III der Figur 2;
- Figur 4: die Überlastprüfvorrichtung der Figur 2 im Schnitt IV-IV.

Die Überlastprüfvorrichtung weist einen Schienenabschnitt 2 auf, der zwischen den Schienenteilen 4,6 eines Schienenstranges angeordnet ist. Der Schienenabschnitt ist an einer Längsseite 8 über Gelenke 10 mit einer ortsfesten Trageinrichtung 12 verbunden. Im vorliegenden Beispiel weist die Trageinrichtung 12 einen über die ganze Länge der Überlastprüfvorrichtung reichenden Längsträger 14 auf, an dem Querträger 16 befestigt sind, die über Böcke 18 jeweils einen Schienenteil 4,6 des Schienenstranges tragen. Die Böcke 18 dienen auch zur Anordnung von Bolzen 20 der Gelenke 10.

Der über die Gelenke 10 beweglich gelagerte Schienenabschnitt 2 weist eine Länge auf, die grösser ist als der Radstand eines Förderwagens (nicht dargestellt) der Kleinförderanlage. Auf der frei beweglichen Längsseite 22 stützt sich der Schienenabschnitt 2 mittels eines Stützgliedes 24 auf einer Blattfeder 26 einer Federeinrichtung 27 ab. Die Blattfeder 26 ist an dem dem Abstützende abgewandten Ende 28 fest mit der Trageinrichtung 12 verbunden. Letztere weist hierzu wiederum einen Querträger 30 und einen hohlen Lagerbock 32 auf. Am freien Ende 34 ist der Federweg F₁ durch einen Anschlag 36, der am Querträger 30 befestigt ist, begrenzt. Um den kleinen Federweg F₁ von beispielsweise 1 mm auf eine besser auswertbare Grösse zu vergrössern, ist eine Übersetzungseinrichtung 38 vorhanden, die aus einem am Anschlag 36 über ein Gelenk 40 gelagerten Arm 42 besteht, der mit seinem freien Ende in den hohlen Lagerbock 32 eingreift. Der Arm 42 ist über ein einstellbares Koppelglied 44 mit der Blattfeder 26 verbunden und vergrössert den Federweg F₁ am freien Ende des Armes 42 beispielsweise auf den fünffachen Federweg F₂. Befindet sich auf dem Schienenabschnitt der Überlastprüfvorrichtung ein überladener Förderwagen, so betätigt der Arm 42 ein Schaltglied 46 einer Anzeige- und/oder Schalteinrichtung 48, welche ein Abfahren des überladenen Förderwagens unterbindet.

Es sind noch zahlreiche weitere Ausführungsbeispiele der Überlastprüfvorrichtung möglich. So kann beispielweise anstelle der Blattfeder ein weiterer schwenkbarer Arm angeordnet sein, der sich beispielsweise über eine Blattfeder am Anschlag 36 abstützt. Als weiteres Ausführungsbeispiel ist denkbar, dass anstelle der Blattfeder bzw. der Schraubenfeder die Bolzen 20 der Gelenke 10 als Torsionsstäbe ausgebildet sind, deren Torsionsmoment zur Überlastprüfung ausgewertet werden kann. Anstelle des Schalters 8 kann beispielsweise auf der Blattfeder 26 ein Dehnmessstreifen aufgeklebt sein, dessen von der Biegung abhängiger Widerstand in einer entsprechenden Anzeige- und/oder Schalteinrichtung ausgewertet werden kann.

## Patentansprüche

1. Überlastprüfvorrichtung für Förderwagen an einer schienengebundenen Kleinförderanlage, wobei im Schienenstrang ein Schienenabschnitt (2), dessen Länge grösser als die Länge des Radstandes eines Förderwagens ist, an einer Seite (8) gelenkig mit einer ortsfesten Trageinrichtung (12) verbunden ist und auf der anderen Seite (22) frei beweglich ist und sich auf einer Federeinrichtung (27) abstützt, die mit einer Anzeige- und/oder Schalteinrichtung (48) verbunden ist, dadurch gekennzeichnet, dass der Schienenabschnitt (2) an einer Längsseite (8) gelenkig gelagert ist, wobei er vorzugsweise mit angrenzenden Schienenteilen (4,6) verbunden ist.

2. Überlastprüfvorrichtung nach Anspruch 1, dadurch gekennzeichnet, dass die Federeinrichtung (27) eine einseitig eingespannte Blattfeder (26) aufweist.

3. Überlastprüfvorrichtung nach Anspruch 2, dadurch gekennzeichnet, dass die Anzeige- und/oder Schalteinrichtung (48) mindestens einen mit der Blattfeder (26) verbundenen Dehnmessstreifen aufweist.

4. Überlastprüfvorrichtung nach einem der Ansprüche 1 bis 2, dadurch gekennzeichnet, dass die Federeinrichtung (27) eine Übersetzungseinrichtung (38) zur Vergrösserung des Federweges (F₁) aufweist.

5. Überlastprüfvorrichtung nach Anspruch 4, dadurch gekennzeichnet, dass die Blattfeder (26) über ein vorzugsweise einstellbares Koppelglied (44) mit einem einseitig gelagerten Arm (42) verbunden ist, dessen freies Ende (34) mit einem Schalterglied (46) einer Anzeige- und/oder Schalteinrichtung (48) zusammenwirkt.

6. Überlastprüfvorrichtung nach einem der Ansprüche 1 bis 5, dadurch gekennzeichnet, dass sie an einer Haltestation angeordnet ist und das Abfahren eines Förderwagens bei Überladung verhindert.

## Claims

1. An overload test device for conveyor cars on a track-bound small conveyor system, in which, in the rail track, a rail section (2), whose length is greater than the wheel base of a conveyor car, is pivotably connected on one side (8) to a fixed support device (12), and on the other side (22) is freely movable and supported on a spring means (27) which is connected to an indicating and/or switching device (48), characterised in that the rail section (2) is pivotably.mounted on a longitudinal side (8), said rail section preferably being connected to adjoining rail portions (4, 6).

2. An overload test device according to claim 1, characterised in that the spring means (27) has a leaf spring (26) which is held at one end.

3. An overload test device according to claim 2, characterised in that the indicating and/or switching device (48) has at least one wire strain gauge connected to the leaf spring (26).

4. An overload test device according to one of claims 1 to 2, characterised in that the spring means (27) has a transmission device (38) for increasing the spring deflection (F₁).

5. An overload test device according to claim 4, characterised in that the leaf spring (26) is connected to an arm (42) which is mounted at one end thereof, via a coupling member (44), which is preferably adjustable, the free end (44) of said arm cooperating with a switching member (46) of an indicating and/or switching device (48).

6. An overload test device according to one of claims 1 to 5, characterised in that it is arranged at a stopping station and prevents a conveyor car from departing when overloaded.

## Revendications

1. Dispositif de contrôle de surcharge d'une installation de transport sur rails à voie étroite où est implantée sur la voie ferrée une section de rails (2) dont la longueur est supérieure à la longueur de l'empattement d'un wagonnet, qui est reliée d'un côté (8) en articulation à un dispositif support fixe (12) et qui est librement mobile à l'autre extrémité (22) et s'appuie sur un dispositif de ressort (27), qui est relié à un dispositif d'affichage et/ou de commutation (48), caractérisé en ce que la section de rails (2) est reliée en articulation sur un côté longitudinal (8), où elle est reliée de préférence aux parties de rails contiguës (4, 6).

2. Dispositif de contrôle de surcharge selon la revendication 1, caractérisé en ce que le dispositif de ressort (27) présente un ressort à lame (26) fixé d'un côté.

3. Dispositif de contrôle de surcharge selon la revendication 2, caractérisé en ce que le dispositif d'affichage et/ou de commutation (48) présente au moins une jauge de contrainte reliée au ressort de lame (26).

4. Dispositif de contrôle de surcharge selon l'une des revendications 1 à 2, caractérisé en ce que le dispositif à ressort (27) présente un dispositif de transmission (38) pour augmenter la course du ressort (F₁).

5. Dispositif de contrôle de surcharge selon la revendication 4, caractérisé en ce que le ressort à lame (26) est relié par un organe de couplage (44) à un bras (42) logé d'un côté, dont l'extrémité libre (34) coopère avec un organe de commutation (46), d'un dispositif d'affichage et/ou de commutation (48).

6. Dispositif de contrôle de surcharge selon l'une des revendications 1 à 5, caractérisé en ce qu'il est implanté dans une station d'arrêt et que le départ d'un wagonnet est empêché en cas de surcharge.
